# EUROPEAN PATENT SPECIFICATION

(11) **EP 3 035 742 B1**
(45) Date of publication and mention of the grant of the patent: **21.02.2018**
(21) Application number: 14198180.3
(22) Date of filing: 16.12.2014
(51) Int. Cl.: H04W 52/02

(54) **DISCOVERY OF A WIRELESS COMMUNICATION DEVICE**
ERFASSUNG EINER DRAHTLOSEN KOMMUNIKATIONSVORRICHTUNG
DÉCOUVERTE DE DISPOSITIF DE COMMUNICATION SANS FILS

(43) Date of publication of application: 22.06.2016
(73) Proprietor: Nokia Technologies Oy, 02610 Espoo (FI)
(72) Inventor: Lindholm, Rune, 22720 Sottunga (FI)
(74) Representative: Berggren Oy, Helsinki & Oulu

(56) References cited:
- EP-A2- 1 672 468
- US-A1- 2009 280 826
- US-A1- 2010 302 980
- US-A1- 2013 003 630

## Description

### TECHNICAL FIELD

The example and non-limiting embodiments of the present invention relate to device discovery for wireless communication.

### BACKGROUND

Establishing a wireless connection between two devices, including e.g. steps of device discovery, device selection and connection setup is in many occasions a complicated operation. Multitude of different communication techniques, communication protocols and user-interface components for controlling use of these techniques/protocols may make it uncomfortable or even difficult for a user of a device to successfully perform the steps required for establishing a connection.

Therefore, in many usage scenarios automated or semi-automated procedures that control availability of a device for a wireless connection and information transfer with other devices significantly improve the user experience. Moreover, for many accessory devices that may be designed to operate completely independently of control by a human user or with very infrequent control by a human user, availability of an automated or semi-automated procedure for controlling the wireless availability may be a necessary requirement.

However, such an automated or semi-automated procedure may face challenges especially when applied in devices that need to rely on limited availability of operating power.

In related art, EP 1672468 A2 discloses a network node that selects a "sleep" level based on its current or projected battery capacity. In an example provided therein, sleep levels define the types of communication to which the node in question will be a party and the physical radius within which the wireless network node will engage other devices. The node in question communicates its selected sleep level to the rest of the network so that the other network nodes can communicate accordingly with the node.

Further in related art, US 2010/302980 A1 discloses a mobile station that is capable of accessing a wireless communication network having a plurality of base stations. The mobile station is configured to determine if a battery level of the mobile station is below a selected one of a plurality of power level thresholds. The mobile station is also configured to, upon a determination that the battery level is below the selected power level threshold, send a battery report to a first base station of the wireless communication network. The mobile station is further configured to enter a battery power preservation mode. The battery power preservation mode may include an enhanced idle mode, an enhanced sleep mode, or a persistent allocation mode.

Further in related art, US 2009/280826 A1 discloses integrated active tags in a mobile device. The mobile device may include (a) a transceiver broadcasting a first location beacon when a capacity of a battery of the mobile device is above a predetermined threshold; and (b) a tag broadcasting a second location beacon when the capacity of the battery of the mobile device is below the predetermined threshold.

### SUMMARY

According to an example embodiment, an apparatus for wireless communication is provided, the apparatus comprising wireless communication means for wireless communication with other devices and control means. The control means is configured to selectively cause the wireless communication means to operate in one of a first state and a second state in dependence of sufficiency of operating power available for the apparatus, wherein said first state is an operational state where the wireless communication means is discoverable and connectable by other devices wherein and said second state is an operational state where the wireless communication means is discoverable but not connectable by other devices. The control means is further configured to determine whether sufficient operating power is available for the apparatus and to cause the wireless communication means to operate in said first state in response to said determination being affirmative and otherwise cause the wireless communication means to operate in said second state, wherein the wireless communication means is configured to transmit, when operating in one of the first and second states, one or more advertising messages that comprise an indication of the current operational state of the wireless communication means, wherein said one or more advertising messages comprise advertising packets in accordance with the Bluetooth Low Energy protocol (BLE), wherein advertising packets transmitted during operation in the first state comprise BLE ADV_IND advertising packets, and advertising packets transmitted during operation in the second state comprise BLE ADV_NONCONN_IND advertising packets.

According to another example embodiment, a method in an apparatus for wireless communication is provided, the method comprising selectively operating a wireless communication means in said apparatus in one of a first state and a second state in dependence of sufficiency of operating power available for the apparatus, wherein the wireless communication means enables wireless communication with other devices and wherein said first state is an operational state where the wireless communication means is discoverable and connectable by other devices and wherein said second state is an operational state where the wireless communication means is discoverable but not connectable by other devices. The method further comprises determining whether sufficient operating power is available for an apparatus and operating the wireless communication means in said first state in response to said determination being affirmative and otherwise operating the wireless communication means in said second state and transmitting, when operating in one of the first and second states, one or more advertising messages that comprise an indication of the current operational state of the wireless communication means, wherein said one or more advertising messages comprise advertising packets in accordance with the Bluetooth Low Energy protocol (BLE), wherein advertising packets transmitted during operation in the first state comprise BLE ADV_IND advertising packets, and advertising packets transmitted during operation in the second state comprise BLE ADV_NONCONN_IND advertising packets.

According to another example embodiment, a computer program is provided, the computer program comprising computer readable program code configured to cause performing, when said program code is run on a computing apparatus, the method according to the example embodiment described in the foregoing.

The computer program referred to above may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 schematically illustrates some components of a device according to an example embodiment.
Figure 2 illustrates example structure applied for advertising data and scan response data in the Bluetooth low energy (BLE) protocol.
Figure 3 schematically illustrates some components of a device according to an example embodiment.
Figure 4 illustrates a method according to an example embodiment.

### DESCRIPTION OF SOME EMBODIMENTS

An approach for device discovery, device selection, connection creation and connection establishment that does not require user interaction may be referred to an automated connection establishment procedure or technique. Along similar lines, an approach for the same where only limited user interaction is required (e.g. initiation of the procedure) may be referred to as a semi-automated or partially automated connection establishment procedure or technique.

While an automated or semi-automated connection establishment typically results in an improved user-experience, for some type of devices an automated or semi-automated connection establishment may be a necessary requirement for some use cases. An example in this regard is a sensor device that is configured to measure a value of an environmental parameter in its location and to transmit, over a wireless link, the measured value(s) to other devices that seek to gain access to the measured value(s).

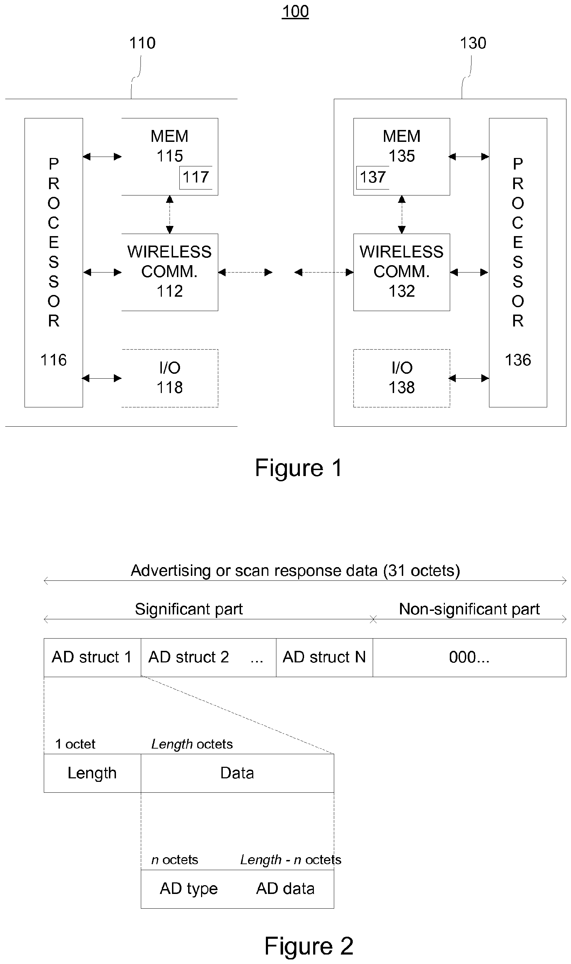

Figure 1 schematically illustrates a first device 110 and a second device 130 as components or entities of a wireless communication arrangement 100 in order to depict an exemplifying framework for one or more embodiments of the present invention. The communication arrangement 100 may be considered to represent a use case where an automated or semi-automated connection establishment technique is applied in order to establish a wireless link between the devices 110, 130 and possibly also to transfer information between the devices 110, 130.

While depicted with an example including a single first device 110 and a single second device 130, the communication arrangement 100 may comprise, for example, a plurality of second device 130-1, 130-2, ..., 130-n. Therefore, in the following the term second device 130, when used in the singular form, is applied to jointly refer to any of the one or more second devices 130-i (e.g. to the second device 130-1, 130-2 or 130-3) unless explicitly stated otherwise. In context of the communication arrangement 100, the first device 110 may be arranged to operate as a discoverable device, while each of the second devices 130 may be arranged to operate as a discovering device.

The first device 110 may be provided as a mobile device or a fixed device or part thereof, e.g. as a wearable accessory (sensor) device (such as a heart rate monitor) or as a sensor device installed in its operation environment in a fixed manner. Figure 1 further schematically illustrates some components of an exemplifying first device 110 that may be relevant for the description of some embodiments of the present invention. The first device 110 comprises a wireless communication portion 112 for wireless communication with other devices. The wireless communication portion 112 comprises one or more wireless communication apparatuses. A wireless communication apparatus of the wireless communication portion 112 may be also considered as a wireless communication means. A wireless communication apparatus of the wireless communication portion 112 may enable, for example, wireless communication with other devices using a short-range wireless communication technique or protocol that provides a point-to-point or point to multi-point wireless connection with another device. The first device 110 is hence capable of communicating with other devices that are equipped with communication apparatus using the same technique/protocol, e.g. with the second device 130.

The first device 110 further comprises a processor 116 and a memory 115 for storing data and computer program code 117. The first device 110 may further comprise user I/O (input/output) components 118 that may be arranged, possibly together with the processor 116 and a portion of the computer program code 117, to provide a user interface for receiving input from a user of the first device 110 and/or providing output to the user of the first device 110. The processor 116 may be arranged to control operation of the first device 110 e.g. in accordance with the computer program code 117 stored in the memory 115 and possibly further in accordance with the user input received via the user I/O components 118 and/or in accordance with information received via the wireless communication portion 112. The memory 115 and a portion of the computer program code 117 stored therein may be further arranged to, with the processor 116, to provide a control function for controlling operation of a wireless communication apparatus of the wireless communication portion 112, possibly together with a control portion or a control function that may be provided within the respective wireless communication apparatus (which will be described later in this text). These control functions may be, separately or jointly, referred to as control means (of the first device 110). The first device 110 may comprise further components or portions in addition to those depicted in Figure 1.

The second device 130 is typically, but not necessarily, provided as a mobile device or part thereof. Figure 1 further schematically illustrates some components of an exemplifying second device 130 that may be relevant for the description of some embodiments of the present invention. The second device 130 comprises a wireless communication portion 132 similar to the wireless communication portion 112. Hence, a wireless communication apparatus of the wireless communication portion 132 may, for example, enable the short-range wireless communication with the first device 110 and/or with other devices equipped with communication means using the same technique/protocol.

The second device 130 further comprises a processor 136 and a memory 135 for storing data and computer program code 137. The second device 130 may further comprise user I/O (input/output) components 138 that may be arranged, together with the processor 136 and a portion of the computer program code 137, to provide a user interface for receiving input from a user of the second device 130 and/or providing output to the user of the second device 130. The processor 136 may be arranged to control operation of the second device 130 in accordance with the computer program code 137 stored in the memory 135 and possibly further in accordance with the user input received via the user I/O components 138 and/or in accordance with information received via the wireless communication portion 132. The memory 135 and a portion of the computer program code 137 stored therein may be further arranged, with the processor 136, to provide a control function for controlling operation of a wireless communication apparatus of the wireless communication portion 132, possibly together with a control portion of a control function that may be provided within the respective wireless communication apparatus (which will be described later in this text). These control functions may be, separately or jointly, referred to as control means (of the second device 130). The second device 130 may comprise further components or portions in addition to those depicted in Figure 1.

As described in the foregoing, each of the wireless communication portions 112, 132 comprises one or more respective wireless communication apparatuses. A wireless communication apparatus may be provided e.g. as a respective chipset and/or as a respective communication module. For clarity and brevity of description, each wireless communication apparatus comprised in the wireless communication portion 112, 132 may be considered as a single logical entity that may also be capable of processing at least some of the information received via the wireless connection and/or at least some of the information that is to be transmitted via the wireless connection without external control from other components of the respective device 110, 130 (e.g. from the processor 116, 136, respectively). In an embodiment, a wireless communication apparatus of the wireless communication portion 112, 132 comprises e.g. a wireless transceiver portion for wireless communication and a control portion (or a control function) for controlling operation of the respective wireless transceiver portion and for processing information received/transmitted via the respective wireless transceiver portion. Such a control function may be provided by hardware means, by software means or by a combination of hardware means and software means. As an example in this regard, the wireless communication apparatus may comprise a memory and a processor, and a computer program code stored in the memory may be arranged to, with the processor, provide the control function for controlling operation of the respective wireless communication apparatus either independently or jointly with the control function provided by the memory 115, 135, the computer program 117, 137 and the processor 116, 136 of the respective device 110, 130.

The wireless connection between a wireless communication apparatus of the wireless communication portion 112 and a respective wireless communication apparatus of the wireless communication portion 132 may be provided by employing a suitable short-range wireless communication technique or protocol. The term short-range wireless communication as used herein refers to a wireless communication technique or protocol that enables typical operating range in the scale of tens of meters, e.g. up to 100 meters. However, especially in an indoor environment, the operating range of such short-range wireless communication technique/protocol may be significantly shorter e.g. due to walls and other stationary structures as well as furniture etc. that are likely to partially block or interfere with the radio communication between wireless communication portions. On the other hand, in favorable conditions in outdoor use the operating range may extend to several hundreds of meters.

Examples of such wireless techniques/protocols include the Bluetooth (BT) Basic Rate / Enhanced Data Rate (BR/EDR) and the Bluetooth Low Energy (BLE) protocols, both specified e.g. in the Bluetooth Specification Version 4.1, Covered Core Package version 4.1 (publication date 3 December 2013), incorporated herein by reference in its entirety. In the following, this document is referred to as a Bluetooth Specification.

While a number of short-range wireless communication techniques/protocols known in the art are applicable in the framework of the communication arrangement 100, in the following some aspects of various embodiments of the present invention are described with references to the BLE protocol and, therefore, a brief overview of the BLE operation is provided in the following.

BLE operates in the unlicensed 2.4 GHz ISM band, in the same manner as the BR/EDR variant of the Bluetooth protocol suite. BLE supports packets from 10 octets to a maximum of 47 octets, thereby providing a low duty cycle. BLE employs a frequency hopping transceiver with many frequency hopping spread spectrum (FHSS) carriers, with a gross air data rate of 1 Megabit per second (Mb/s).

BLE is designed for applications that do not require high data rates and/or low latency, but which may benefit from a very-low power idle mode, from a simple device discovery, and from usage of short data packets. BLE protocol allows a star network topology in connections, where one device may serve as a master for a plurality of slave devices. The master device dictates the connection timing and communication operations of the one or more slave devices.

BLE communicates over a total of 40 radio frequency (RF) channels, separated by 2 MHz. Data communication between BLE devices occurs in 37 pre-specified data channels of the 40 RF channels, while the remaining 3 channels of the 40 RF channels are advertising channels used by devices to advertise their presence and capabilities. A physical channel is sub-divided into time units known as events, and information between BLE devices is transmitted in packets that are positioned in these events. There are two types of events: advertising events and connection events. Data connection transmissions occur in connection events once a point-to-point connection is established between the master device and a slave device. In the BLE protocol, a slave device may provide data through BLE communication to the master device to which it is connected and vice versa. In addition to transferring data in connection events, it is also possible to transmit data in BLE advertising events (as will be described in the following).

The BLE protocol defines a unidirectional connectionless broadcast mode on the advertising channels. A TDMA based polling scheme is used in which one device transmits a packet at a predetermined time and, when connected, a corresponding device responds with a packet after a predetermined interval. Devices that transmit advertising packets on the advertising Physical Layer (PHY) channels are referred to as advertisers or advertising devices. Devices that receive advertising on the advertising channels without immediate intention to connect to the advertising device are referred to as scanners or scanning devices.

Transmissions on the advertising PHY channels occur in advertising events. At the start of each advertising event, the advertiser sends an advertising packet corresponding to an advertising event type. Depending on the type of the advertising packet, the scanner may make a request to the advertiser on the same advertising PHY channel which may be followed by a response from the advertiser on the same advertising PHY channel. The advertising PHY channel changes on the next advertising packet sent by the advertiser in the same advertising event. The advertiser may end the advertising event at any time during the event. The first advertising PHY channel is used at the start of the next advertising event.

Devices that wish to establish a connection to another device listen for connectable advertising packets. Such devices are referred to as initiators or initiator devices. If the advertiser is using a connectable advertising event, an initiator may make a connection request using the same advertising PHY channel on which it received the connectable advertising packet. The advertising event is ended and connection events begin if the advertiser receives and accepts the request for a connection to be initiated. Once the connection is established, the initiator becomes the master device in what is referred to as a piconet and the advertising device becomes the slave device. Connection events are used to send data packets between the master and slave devices.

Figure 2 illustrates example structure applied for advertising data and scan response data in the BLE protocol. The advertising or scan response data comprises a significant part and a non-significant part. The significant part carries the data and the non-significant part contains all-zero octets and its purpose is to extend the data if padding is needed to reach data size of 31 octets. Only the significant part needs to be sent over the radio link. The significant part comprises a sequence of advertising data (AD) structures (represented by AD struct 1, AD struct 2 and AD struct N in the example of Figure 2). Each AD structure contains the length value L (one octet) followed by the data octets (L octets). The data octets include the AD type field (*n* octets, depending on the AD type) followed by the AD data octets (*L* - *n* octets). Advertising data according to the example of Figure 2 may be transmitted in a BLE advertising message. Advertising data may be carried in the AdvData field of an ADV_IND packet, of an ADV_NONCONN_IND packet or of an ADV_SCAN_IND packet. Scan response data according to the example of Figure 2 may be carried in the ScanRspData filed of a SCAN_RSP packet. More detailed description of the advertising data and scan response data with the framework of BLE is provided e.g. in the Bluetooth Specification Volume 3, Part C, Section 11.

However, the BLE protocol outlined above and referred to in the following serves as an illustrative and non-limiting example in this regard, and the description generalizes into any wireless communication protocol where the first device 110 and the second device 130 are capable of establishing a wireless point-to-point connection therebetween on basis of information carried in packets and/or messages of advertising events transmitted from the first device 110 and where these advertising events provide information concerning the connectivity status of the first device 110, as will be described in the following in more detail.

In the context of the communication arrangement 100, the user of the second device 130 may wish to obtain access to certain information and/or to a certain service available in a device of certain type that is arranged to provide such information and/or service over a wireless connection. Throughout the example embodiments described herein, the first device 110 is assumed to represent such a device, while the description of course generalizes into the second device 130 attempting to obtain access to information and/or service in any device that is arranged to provide the respective information and/or service.

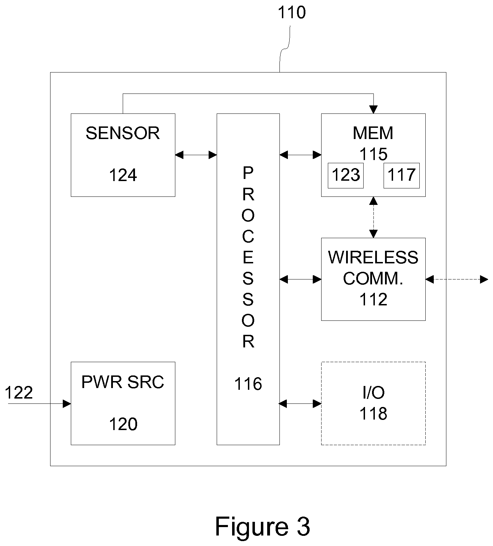

Figure 3 schematically illustrates some further components of the first device 110 according to an example embodiment. In particular, Figure 3 (further) illustrates a power source 120 for providing operating power for components of the first device 110 and sensor means 124 for collecting information using one or more sensors. In Figure 3 connections between the power source 120 and components of the first device 110 are not shown for improved graphical clarity of illustration.

The power source 120 may comprise e.g. one or more replaceable (single-use) batteries and/or one or more accumulators such as rechargeable batteries or capacitor arrangements. The first device 110 (e.g. the control means) may be arranged to measure (or receive an indication of) the power reserve available in the power source 120. The measuring (or reception) may occur substantially continuously or according to a predetermined schedule, e.g. at predetermined intervals. Although illustrated in Figure 3 as part of the device 110, the power source 120 may be alternatively provided as a component that is external to the first device 110 but that is electrically coupled thereto. Hence, the power source 120 may be referred to as a power source that is accessible by the first device 110 for reception of operating power.

The first device 110 may comprise an input 122 for an external power supply for reception of (further) operating power. The input 122 may be provided as connector means that is suitable for electrically coupling the first device 110 to the external power supply. The input 122 may be electrically coupled to the power source 120, thereby causing the power source 120 to be (re)charged when the first device 110 is in receipt of operating power from the external power supply via the input 122. Additionally or alternatively, the input 122 may be electrically coupled to the processor 116 and/or one or more other components of the first device 110 to enable direct provision of operating power thereto when the first device 110 is in receipt of operating power from the external power supply via the input 122.

The sensor means 124 may comprise one or more sensors that are arranged to measure values of one or more respective environmental parameters in or near the location of the sensor means 124 and to make the measured value(s) available to other devices via a wireless connection. A sensor of the sensor means 124 may be arranged to measure, for example, temperature, air pressure, humidity, CO₂ level, etc. As another example, the sensor means 124 may comprise a sensor arranged to measure a parameter of different kind, e.g. a heart rate or other parameter related to the physical state of a user wearing an accessory comprising the first device 110. As a further example, the sensor means 124 may comprise a sensor that is arranged to measure a parameter that is related to the position and/or movement of a user wearing an accessory comprising the first device 110 or otherwise carrying the first device 110, e.g. the geographical position and/or the speed of a user carrying or wearing the first device 110.

The sensor means 124 may be arranged to store the measured values e.g. in a memory device, e.g. the memory 115, another memory accessible by the first device 110 and/or a memory provided in a mass storage device that is provided in the first device 110 or that is otherwise accessible by the first device 110. The stored values may hence constitute the information 123 available at the first device 110 for retrieval by other devices (e.g. the second device 130) over a wireless connection.

However, the sensor means 124 of Figure 3 serves as a non-limiting example concerning the source of information 123 available (for retrieval) in the first device 110 and the first device 110 may be provided without the sensor means 124 or the sensor means 124 may be replaced with an information source of other type. In general, the information 123 may comprise any static information stored in the first device 110 and/or any dynamically updated information extracted or received by the first device 110. As an example, the information 123 may be stored (e.g. uploaded) to the first device 110 upon installation or (re)configuration of the first device 110. In this regard, the first device 110 may be arranged to receive the information via a wireless or wired connection from another device.

In order to enable transfer of information between the devices 110, 130, each of a wireless communication apparatus of the wireless communication portion 112 (in the first device 110) the respective wireless communication apparatus of the wireless communication portion 132 (in the second device 130) need to be operated in an appropriate operational state. In this regard, a suitable combination of the following operational states may be applied:
- *a discoverable state* of a wireless communication apparatus is an operational state in which the wireless communication apparatus is discoverable by other wireless communication apparatuses;
- *a discovering state* of a wireless communication apparatus is an operational state in which the wireless communication apparatus is attempting to discover other wireless communication apparatuses;
- *a connectable state* of a wireless communication apparatus is an operational state in which the wireless communication apparatus connectable by other wireless communication apparatuses;
- *a non-connectable state* of a wireless communication apparatus is an operational state in which the wireless communication apparatus is not connectable by other wireless communication apparatuses, while at the same time it is typically, but not necessarily, discoverable by other wireless communication apparatuses;
- *a connecting state* of a wireless communication apparatus is an operational state in which the wireless communication apparatus is attempting to create a connection with another wireless communication apparatus;

In general, a wireless communication apparatus of the wireless communication portion 112, 132 may be operated in a single one of the operational states described above or it may be simultaneously operated in two or more of the operational states described above. Operation in each of the above-defined states may be implemented in one of a number of ways. Illustrative examples in the framework of the BLE protocol are provided later in this text.

In the following, this text may simply refer to a device 110, 130 operating (or being operated under control of the respective control function or control means) in a certain operational state (e.g. in one of the states described above) when referring to an operational state of a wireless communication apparatus of the respective wireless communication portion 112, 132. Along similar lines, this text may refer to a device 110, 130 carrying out a certain operation (e.g. receiving and/or transmitting certain message(s), packet(s) or event(s)) when describing the act of a wireless communication apparatus of the respective wireless communication portion 112, 132 carrying out said certain operation under control of the respective control function or control means. This approach is believed to improve editorial clarity and readability of the text, while the technical meaning of these expressions remains clear.

A pair of devices, e.g. the first device 110 and the second device 130, that are within an operating range from each other with one device operating in the discoverable state and the other device operating in the discovering state may carry out a discovery procedure that involves detecting presence of the other device as well as requesting and acquiring information related to the connection creation and establishment between the pair of devices, related to identity of at least one of the devices and/or information related to services available in at least one of the devices. Along similar lines, a pair of devices that are within an operating range from each other with one device operating in the connectable state and the other device operating in the connecting state may carry out a connection creation procedure that involves detecting presence of the other device as well as requesting and acquiring (further) information related to connection creation or establishment between the pair of devices and/or identities of the devices. The connection creation may further be followed by creation of a wireless link and transfer of data between the pair of devices.

In the following, an overview of the communication and information transfer between the devices 110, 130 and some aspects of operation of each of the first device 110 and the second device 130 is described at a high level.

As a starting point for device discovery and potential data transfer between the first device 110 and the second device 130, the first device 110 is operating in the discoverable state, whereas the second device 130 is operating in the discovering state. Depending on sufficiency of available operating power in the first device 110, the first device 110 is at the same time also operated in one of the connectable state and non-connectable state. In particular, if sufficient operating power is available for the first device 110 the first device 110 is operated in the connectable state, whereas in case sufficient operating power is not available the first device 110 is operated in the non-connectable state.

As an example, an indication of sufficient operating power may include a requirement that the first device 110 is in receipt of operating power from an external power supply, such as mains electricity. In contrast, an indication of less than sufficient operating power may include that the first device 110 is not in receipt of operating power from an external power supply. As another example, an indication of sufficient operating power may comprise a requirement that a power reserve in the power source 120 exceeds a predefined threshold. In contrast, an indication of less than sufficient operating power may involve the reserve of operating power available in the power source 120 failing to exceed the predefined threshold.

As a further example, the criteria for sufficiency of operating power may be a combination of the above examples: a first indication of sufficient operating power may include that the first device 110 is in receipt of operating power from an external power supply and that the power reserve in the power source 120 exceeds a first predefined threshold, a second indication of sufficient operating power may include that the first device 110 is not in receipt of operating power from an external power supply and that the power reserve in the power source 120 exceeds a second predefined threshold that is higher than the first predefined threshold, whereas in other cases the operating power may be considered to be insufficient.

While creating and establishing a wireless link and transmission (or exchange) of information over the established wireless link typically results in increased power consumption in comparison to operation in a non-connected state, the criteria concerning availability of sufficient operating power can be applied to ensure that there is sufficient operating power to carry out the information transfer (or exchange) and/or to ensure a sufficient reserve of remaining operating power after the information transfer (or exchange).

The first device 110 may indicate its current operational state by using advertising messages transmitted (e.g. broadcast) therefrom over a wireless channels. The advertising messages comprise an indication of the current operational state of the first device 110 (or that of the wireless communication apparatus of the wireless communication portion 112 employed for wireless communication with other devices). The advertising messages may further comprise an indication of the identity assigned for the first device 110, e.g. an address of the wireless communication apparatus of the wireless communication portion 112 employed for wireless communication with other devices or other address or identifier associated with the first device 110.

The first device 110 may be arranged to transmit advertising messages such that one or more advertising messages are transmitted at a fixed predetermined transmission interval. As another example, the first device 110 may be able to select the transmission interval in dependence of sufficiency of operating power available for the first device 110. As an example in this regard, the first device 110 may be arranged to employ a first (low) transmission interval in case the first device 110 is in receipt of operating power from an external power supply and to employ a second (high) transmission interval in case the first device 110 is not in receipt of operating power from an external power supply. As another example in this regard, the first device 110 may be arranged to select the employed transmission interval in dependence of an available power reserve in the power source 120. This selection may comprise selecting the employed transmission interval between a predefined minimum transmission interval and a predefined maximum transmission interval such that decreasing power reserve results in increasing transmission interval and vice versa.

Along similar lines, the transmission power level applied in transmission of the advertising messages may be selectively set in dependence of sufficiency of operating power available for the first device 110, thereby adjusting the effective operating range of the first device 110 in dependence of the sufficiency of operating power. As an example in this regard, the first device 110 may be arranged to employ a first (high) transmission power level in case the first device 110 is in receipt of operating power from an external power supply and to employ a second (low) transmission power level in case the first device 110 is not in receipt of operating power from an external power supply. As another example in this regard, the first device 110 may be arranged to select the employed transmission power level in dependence of an available power reserve in the power source 120. This selection may comprise selecting the employed transmission power level between a predefined minimum transmission power level and a predefined maximum transmission power level such that decreasing power reserve results in decreasing transmission power level and vice versa.

Consequently, when detecting that the first device 110 is operating in the connectable state, the second device 130 may switch operating in the connecting state and proceed with requesting a wireless connection with the first device 110 to be established. Once the first device 110 has received the connection request from the second device 130, the wireless link between the devices 110, 130 may be created and established. Consequently, the second device 130 may request and/or the first device 110 may transmit the information 123 available thereat over the wireless link according to predefined protocol provided for this purpose. Details of such protocol are outside the scope of the present invention. This data transfer may be considered as the second device 130 downloading the information 123 from the first device 110.

Moreover, the established wireless link may be, alternatively or additionally, employed for transmitting, from the second device 130 to the first device 110, configuration information, which may result in the first device 110 adjusting or re-configuring at least some aspects of its operation. As an example in this regard, the configuration information may comprise instructions concerning operation of the sensor means 124 provided in the first device 110, e.g. instructions to configure or adjust the measurement interval employed by one or more sensors of the sensor means 124 in a manner specified in the configuration information or instructions concerning pieces of the information 123 that are available for retrieval in the first device 110 to be subsequently transmitted from the first device 110 to other devices. As a further example, the configuration information may comprise data to be stored in the first device as the information 123 for subsequent retrieval by other devices over a wireless connection. Such data transfer may be considered as the second device 130 uploading the information 123 to the first device 110.

When detecting that the first device 110 is operating in the non-connectable state, the second device 130 may continue operating in the discovering state. Nevertheless, in case the first device 110 is transmitting the advertising messages, the advertising messages may comprise predefined selected pieces of the information 123 available in the first device 110. In other words the advertising messages may be employed to distribute a limited subset of the information 123. Consequently, the second device 130 may be able to receive at least part of the information 123 available in the first device 110 even though the first device 110 is not currently connectable by other devices.

As an example, in case the information 123 available in the first device 110 consists of one or more values of one or more environmental parameters measured using the sensor means 124, a limited subset of this information provided in the advertising messages may include measured values of only one or some of the environmental parameters and/or values of the measured environmental parameters provided at prolonged intervals and/or at lower accuracy. Typically, an advertising message may carry a few octets of data (e.g. in the range from 1 to 32 octets), whereas the overall data rate of the pieces of information carried in the advertising messages depends on the (currently) employed transmission interval of the advertising messages. The advertising messages that carry the information 123 available in the first device 110 may comprise some or all advertising messages transmitted when the first device 110 is operating in the connectable state and/or some or all advertising messages transmitted when the first device 110 is operating in the non-connectable state.

While delivering limited pieces of the information 123 in the advertising messages may slightly increase the power consumption of the first device 110 in comparison to transmitting advertising messages without any additional data, the resulting increase in power consumption can be considered to be small in comparison to that required in creating and establishing a wireless link to the second device 130 and transferring the full set of information 123 thereto. Moreover, the mechanisms of selecting the transmission interval and/or transmission power level in dependence of sufficiency of operating power available for the first device 110 described above may be applied to ensure that sufficient operating power is available (and/or that a sufficient reserve of operating power remains) despite the limited information transfer in the advertising messages.

As discussed in the foregoing, according to an example embodiment, the first device 110 and the second device 130 may be arranged to employ the BLE protocol for wireless communication between each other. In this regard, the discoverable state of the first device 110 may comprise the BLE advertising state, whereas the discovering state of the second device 130 may comprise the BLE scanning state. When operating also in the connectable state, the first device 110 may transmit advertising messages that comprise ADV_IND packets (in respective connectable undirected advertising events), whereas when operating also in the non-connectable state, the first device 110 may transmit ADV_IND_NONCONN_IND packets (in respective non-connectable undirected advertising events). The pieces of the information 123 available in the first device 110 possibly transmitted in the advertising messages may be included e.g. in the AdvData field of the respective advertising packets, which enables carrying up to 32 octets (or bytes) of information (see e.g. the Bluetooth Specification, Volume 6, Section 2.3). The overall data rate of the pieces of the information 123 carried in the advertising messages depends on the (currently) employed transmission interval of the advertising packets.

As an example, the sufficiency of the operating power reserve available in the power source 120 may be partially rely on actions of a human user or operator, e.g. such that the sufficiency of the operating power may depend on the user/operator replacing (non-rechargeable) battery or batteries of the power source 120 or connecting the first device 110 to an external power source for recharging rechargeable battery or batteries of the power source 120.

As another example, the first device 110 may be provided with or electrically coupled to a power harvesting arrangement that is arranged to autonomously harvest power and to provide the harvested power for recharging the battery or batteries of the power source 110. As a non-limiting example of the power harvesting arrangement, e.g. an arrangement comprising one or more photovoltaic cells may be employed.

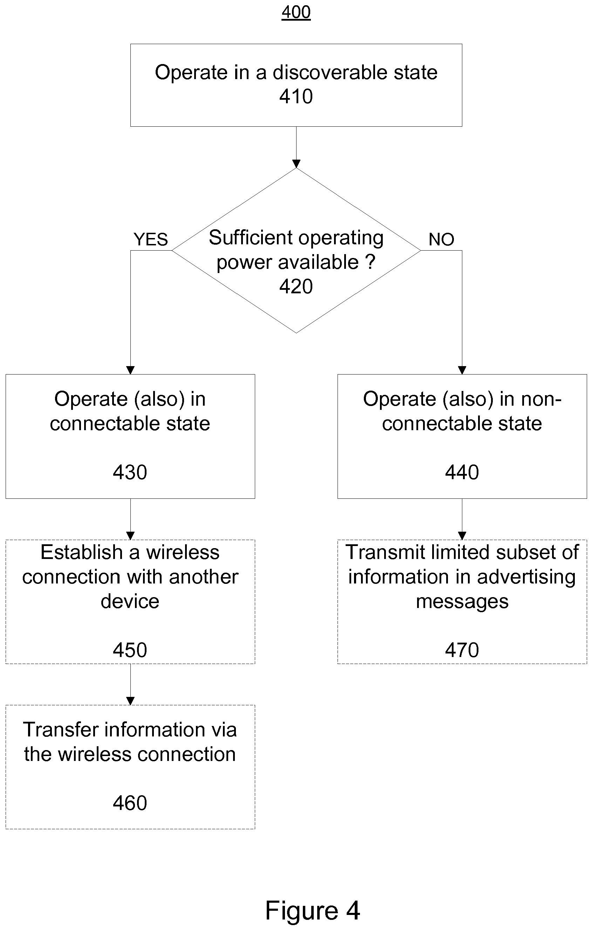

In the following, an example embodiment of the present invention is described with references to a method 400 depicted by the flowchart illustrated in Figure 4. The method 400 proceeds from the first device 110 operating in the discoverable state, as indicted in block 410. As described in the foregoing, when operating in the discoverable state, the first device 110 selectively operates the also in one of the connectable state and non-connectable state in dependence of the sufficiency of the operating available for the first device 110. In this regard, while operating in the discoverable state, the first device 110 determines whether sufficient operating power is available for the first device 110, as indicated in block 420. In case the determination of block 420 is affirmative, the first device 110 operates also in the connectable state, as indicated in block 430. In case the determination of block 420 is non-affirmative, the first device 110 operates also in the non-connectable state, as indicated in block 440. As described in the foregoing, the first device 110 may indicate its presence by transmitting one or more advertising messages and at least some of these messages comprise an indication of its operational state, e.g. the connectable state (block 430) or the non-connectable state (block 440).

The method 400 may continue from block 430 with the first device 110, in response to receiving a connection request from the second device 130, establishing a wireless link with the second device 130, as indicated in block 450, and transmitting the information 123 available in the first device 110 over the established wireless link to the second device 130, as indicated in block 460. Moreover, as described in the foregoing, In case the first device 110 transmits the advertising messages, from block 440 the method 400 may continue with the first device 110 including a limited subset of the information 123 available in the first device 110 in at least in some of the advertising messages transmitted therefrom.

The exemplifying method 400 may be varied in a number of ways, e.g. as described in the foregoing in more detailed description of the operation of and information exchange between the first device 110 and the second device 130.

Referring back to Figure 1, the processor 116 is configured to read from and write to the memory 115 and the processor 136 is configured to read from and write to the memory 135. Although the processor 116, 136 is depicted as a single component, the processor 116, 136 may be implemented as one or more separate components. Similarly, although the memory 115, 135 is illustrated as a single component, the memory 115, 135 may be implemented as one or more separate components, some or all of which may be integrated/removable and/or may provide permanent / semi-permanent/ dynamic/cached storage.

The memory 115 may store the computer program 117 comprising computer-executable instructions that control the operation of the apparatus 110 when loaded into the processor 116. As an example, the computer program 117 may include one or more sequences of one or more instructions. The computer program 117 may be provided as a computer program code. The processor 116 is able to load and execute the computer program 117 by reading the one or more sequences of one or more instructions included therein from the memory 115. The one or more sequences of one or more instructions may be configured to, when executed by the processor 116, cause the apparatus 110 to carry out operations, procedures and/or functions described in the foregoing in context of the first device 110. Hence, the apparatus 110 may comprise at least one processor 116 and at least one memory 115 including computer program code for one or more programs, the at least one memory 115 and the computer program code configured to, with the at least one processor 116, cause the apparatus 110 to perform operations, procedures and/or functions described in the foregoing in context of the first device 110.

The memory 135 may store a computer program 137 comprising computer-executable instructions that control the operation of the apparatus 130 when loaded into the processor 136. As an example, the computer program 137 may include one or more sequences of one or more instructions. The computer program 137 may be provided as a computer program code. The processor 136 is able to load and execute the computer program 137 by reading the one or more sequences of one or more instructions included therein from the memory 135. The one or more sequences of one or more instructions may be configured to, when executed by the processor 136, cause the apparatus 130 to carry out operations, procedures and/or functions described in the foregoing in context of the second device 130. Hence, the apparatus 130 may comprise at least one processor 136 and at least one memory 135 including computer program code for one or more programs, the at least one memory 135 and the computer program code configured to, with the at least one processor 136, cause the apparatus 130 to perform operations, procedures and/or functions described in the foregoing in context of the second device 130.

The computer program 117 may be provided e.g. as a computer program product comprising at least one computer-readable non-transitory medium having program code stored thereon, the program code, when executed by the apparatus 110, causing the apparatus at least to perform operations, procedures and/or functions described in the foregoing in context of the first device 110. The computer program 137 may be provided e.g. as a computer program product comprising at least one computer-readable non-transitory medium having program code stored thereon, the program code, when executed by the apparatus 130, causing the apparatus at least to perform operations, procedures and/or functions described in the foregoing in context of the second device 130.

The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. An apparatus (110) for wireless communication comprising
wireless communication means (112) for wireless communication with other devices (130) and control means configured to selectively cause the wireless communication means (112) to operate in one of a first state and a second state in dependence of sufficiency of operating power available for the apparatus (110), wherein
said first state is an operational state where the wireless communication means (112) is discoverable and connectable by other devices (130), and
said second state is an operational state where the wireless communication means (112) is discoverable but not connectable by other devices (130), and
determine whether sufficient operating power is available for the apparatus (110),
cause the wireless communication means (112) to operate in said first state in response to said determination being affirmative and otherwise cause the wireless communication means (112) to operate in said second state,
**characterized in that** the wireless communication means (112) is configured to transmit, when operating in one of the first and second states, one or more advertising messages that comprise an indication of the current operational state of the wireless communication means (112), wherein said one or more advertising messages comprise advertising packets in accordance with the Bluetooth Low Energy protocol, BLE, wherein
advertising packets transmitted during operation in the first state comprise BLE ADV_IND advertising packets, and
advertising packets transmitted during operation in the second state comprise BLE ADV_NONCONN_IND advertising packets.

2. An apparatus according claim 1, wherein said determination comprises determining whether a power reserve available in a power source accessible by the apparatus exceeds a predefined threshold.

3. An apparatus according to claim 1 or 2, wherein said determination comprises determining whether the apparatus is in receipt of operating power from an external power supply.

4. An apparatus according to any of claims 1 to 3, wherein the control means is arranged to carry out one or more of the following:
adjust transmission interval of said one or more advertising messages in dependence of sufficiency of operating power available for the apparatus; and
adjust transmission power level of said one or more advertising messages in dependence of sufficiency of operating power available for the apparatus.

5. An apparatus according to any of claims 1 to 4, wherein advertising messages transmitted during operation at least in one of the first state and second state comprise a limited subset of the information available in the apparatus

6. An apparatus according to any of claims 1 to 5, wherein the wireless communication means is configured to establish, in response to receiving a connection request when operating in said first state, a wireless connection with source of said connection request, and wherein the control means is configured to cause the wireless communication means to perform at least one of the following:
transmit information available in the apparatus to said source over the established wireless connection, and
receive information related to configuration of the apparatus from said source over the established wireless connection.

7. An apparatus according to claim 5 or 6, wherein
the apparatus further comprises sensor means comprising one or more sensors for measuring values of respective one or more environmental parameters; and
said information available in the apparatus comprises one or more measured values of at least one of said one or more environmental parameters.

8. A method (400), in an apparatus (110) for wireless communication, the method (400) comprising
selectively operating a wireless communication means (112) in said apparatus (110) in one of a first state and a second state in dependence of sufficiency of operating power available for the apparatus (110), wherein the wireless communication means (112) enables wireless communication with other devices (130) and wherein
said first state is an operational state where the wireless communication means (112) is discoverable and connectable by other devices (130), and
said second state is an operational state where the wireless communication means (112) is discoverable but not connectable by other devices (130),
determining (420) whether sufficient operating power is available for the apparatus (110),
operating (430, 440) the wireless communication means (112) in said first state in response to said determination being affirmative and otherwise operating the wireless communication means (112) in said second state,
**characterized in that** the method (400) comprises transmitting, by the wireless communication means (112), when operating in one of the first and second states, one or more advertising messages that comprise an indication of the current operational state of the wireless communication means (112), wherein said one or more advertising messages comprise advertising packets in accordance with the Bluetooth Low Energy protocol, BLE, wherein
advertising packets transmitted during operation in the first state comprise BLE ADV_IND advertising packets, and
advertising packets transmitted during operation in the second state comprise BLE ADV_NONCONN_IND advertising packets.

9. A method according claim 8, wherein said determination comprises determining whether a power reserve available in a power source accessible by the apparatus exceeds a predefined threshold.

10. A method according to claim 8 or 9, wherein said determination comprises determining whether the apparatus is in receipt of operating power from an external power supply.

11. A method according to any of claims 8 to 10, further comprising adjusting transmission interval of said one or more advertising messages in dependence of sufficiency of operating power available for the apparatus

12. A computer program comprising computer readable program code configured to cause performing of the method of any of the claims 8 to 11 when said program code is run on a computing apparatus.

## Patentansprüche

1. Vorrichtung (110) für eine drahtlose Kommunikation, die Folgendes umfasst:
Mittel (112) für drahtlose Kommunikation für eine drahtlose Kommunikation mit anderen Vorrichtungen (130) und Steuermittel, die konfiguriert sind:
wahlweise zu bewirken, dass die Mittel (112) für drahtlose Kommunikation in Abhängigkeit von der Zulänglichkeit der für die Vorrichtung (110) verfügbaren Betriebsleistung in einem ersten Zustand oder einem zweiten Zustand arbeiten, wobei
der erste Zustand ein Betriebszustand ist, in dem die Mittel (112) für drahtlose Kommunikation durch andere Vorrichtungen (130) feststellbar und verbindbar sind, und
der zweite Zustand ein Betriebszustand ist, in dem die Mittel (112) für drahtlose Kommunikation durch andere Vorrichtungen (130) feststellbar, aber nicht verbindbar sind, und
zu bestimmen, ob genügend Betriebsleistung für die Vorrichtung (110) verfügbar ist,
als Reaktion darauf, dass die Bestimmung positiv ist, zu bewirken, dass die Mittel (112) für drahtlose Kommunikation in dem ersten Zustand arbeiten, und anderenfalls zu bewirken, dass die Mittel (112) für drahtlose Kommunikation in dem zweiten Zustand arbeiten,
**dadurch gekennzeichnet, dass** die Mittel (112) für drahtlose Kommunikation konfiguriert sind, dann, wenn sie in dem ersten oder dem zweiten Zustand arbeiten, eine oder mehrere Werbenachrichten zu senden, die eine Angabe des derzeitigen Betriebszustands der Mittel (112) für drahtlose Kommunikation umfassen, wobei die eine oder die mehreren Werbenachrichten Werbepakete in Übereinstimmung mit dem "Bluetooth Low Energy"-Protokoll, BLE-Protokoll, umfassen, wobei
während des Betriebs in dem ersten Zustand gesendete Werbepakete BLE-ADV_IND-Werbepakete umfassen und
während des Betriebs in dem zweiten Zustand gesendete Werbepakete BLE-ADV_NONCONN_IND-Werbepakete umfassen.

2. Vorrichtung nach Anspruch 1, wobei die Bestimmung umfasst, zu bestimmen, ob eine Leistungsreserve, die in einer Leistungsquelle verfügbar ist, auf die die Vorrichtung zugreifen kann, einen vorgegebenen Schwellenwert überschreitet.

3. Vorrichtung nach Anspruch 1 oder 2, wobei die Bestimmung umfasst, zu bestimmen, ob die Vorrichtung Betriebsleistung von einer externen Leistungsversorgung bezieht.

4. Vorrichtung nach einem der Ansprüche 1 bis 3, wobei die Steuermittel ausgelegt sind, eines oder mehrere des Folgenden auszuführen:
ein Übertragungsintervall der einen oder der mehreren Werbenachrichten in Abhängigkeit von der Zulänglichkeit der für die Vorrichtung verfügbaren Betriebsleistung anzupassen und
einen Sendeleistungspegel der einen oder der mehreren Werbenachrichten in Abhängigkeit von der Zulänglichkeit der für die Vorrichtung verfügbaren Betriebsleistung anzupassen.

5. Vorrichtung nach einem der Ansprüche 1 bis 4, wobei während des Betriebs in dem ersten Zustand und/oder dem zweiten Zustand gesendete Werbenachrichten eine begrenzte Untergruppe der in der Vorrichtung verfügbaren Informationen umfassen.

6. Vorrichtung nach einem der Ansprüche 1 bis 5, wobei die Mittel für die drahtlose Kommunikation konfiguriert sind, als Reaktion auf das Empfangen einer Verbindungsanforderung, wenn sie in dem ersten Zustand arbeiten, eine drahtlose Verbindung mit der Quelle der Verbindungsanforderung einzurichten, und
wobei die Steuermittel konfiguriert sind, zu bewirken, dass die Mittel für die drahtlose Kommunikation zumindest eines der Folgenden ausführen:
Informationen, die in der Vorrichtung verfügbar sind, über die eingerichtete drahtlose Verbindung an die Quelle zu senden und
Informationen bezüglich der Konfiguration der Vorrichtung von der Quelle über die eingerichtete drahtlose Verbindung zu empfangen.

7. Vorrichtung nach Anspruch 5 oder 6, wobei
die Vorrichtung ferner Sensormittel umfasst, die einen oder mehrere Sensoren umfassen, um Werte jeweils eines oder mehrerer Umgebungsparameter zu messen; und
die in der Vorrichtung verfügbaren Informationen einen oder mehrere gemessene Werte des mindestens einen oder der mehreren Umgebungsparameter umfassen.

8. Verfahren (400) in einer Vorrichtung (110) für drahtlose Kommunikation, wobei das Verfahren (400) Folgendes umfasst:
wahlweise Betreiben von Mitteln (112) für drahtlose Kommunikation in der Vorrichtung (110) in einem ersten Zustand oder einem zweiten Zustand in Abhängigkeit von der Zulänglichkeit der für die Vorrichtung (110) verfügbaren Betriebsleistung, wobei die Mittel (112) für drahtlose Kommunikation eine drahtlose Kommunikation mit anderen Vorrichtungen (130) ermöglichen und wobei
der erste Zustand ein Betriebszustand ist, in dem die Mittel (112) für drahtlose Kommunikation durch andere Vorrichtungen (130) feststellbar und verbindbar sind und
der zweite Zustand ein Betriebszustand ist, in dem die Mittel (112) für drahtlose Kommunikation durch andere Vorrichtungen (130) feststellbar, aber nicht verbindbar sind, und
Bestimmen (420), ob genügend Betriebsleistung für die Vorrichtung (110) verfügbar ist,
Betreiben (430, 440) der Mittel (112) für drahtlose Kommunikation in dem ersten Zustand als Reaktion darauf, dass die Bestimmung positiv ist, und anderenfalls Betreiben der Mittel (112) für drahtlose Kommunikation in dem zweiten Zustand,
**dadurch gekennzeichnet, dass** das Verfahren (400) umfasst, durch die Mittel (112) für drahtlose Kommunikation dann, wenn sie in dem ersten oder dem zweiten Zustand arbeiten, eine oder mehrere Werbenachrichten zu senden, die eine Angabe des derzeitigen Betriebszustands der Mittel für die drahtlose Kommunikation (112) umfassen, wobei die eine oder die mehreren Werbenachrichten Werbepakete in Übereinstimmung mit dem "Bluetooth Low Energy"-Protokoll, BLE-Protokoll, umfassen, wobei
während des Betriebs in dem ersten Zustand gesendete Werbepakete BLE-ADV_IND-Werbepakete umfassen und
während des Betriebs des zweiten Zustands gesendete Werbepakete BLE-ADV_NONCONN_IND-Werbepakete umfassen.

9. Verfahren nach Anspruch 8, wobei die Bestimmung umfasst, zu bestimmen, ob eine Leistungsreserve, die in einer Leistungsquelle verfügbar ist, auf die die Vorrichtung zugreifen kann, einen vorgegebenen Schwellenwert überschreitet.

10. Verfahren nach Anspruch 8 oder 9, wobei die Bestimmung umfasst, zu bestimmen, ob die Vorrichtung Betriebsleistung von einer externen Leistungsversorgung bezieht.

11. Verfahren nach einem der Ansprüche 8 bis 10, das ferner umfasst, ein Übertragungsintervall der einen oder der mehreren Werbenachrichten in Abhängigkeit von der Zulänglichkeit der für die Vorrichtung verfügbaren Betriebsleistung anzupassen.

12. Computerprogramm, das computerlesbaren Programmcode umfasst, der konfiguriert ist, die Ausführung des Verfahrens nach einem der Ansprüche 8 bis 11 zu bewirken, wenn der Programmcode auf einer Rechenvorrichtung läuft.

## Revendications

1. Appareil (110) pour communiquer sans fil, comprenant :
un moyen de communication sans fil (112) pour communiquer sans fil avec d'autres dispositifs (130) et un moyen de commande configuré pour
amener de façon sélective le moyen de communication sans fil (112) à fonctionner dans un état parmi un premier état et un deuxième état en fonction de la suffisance d'une puissance de fonctionnement disponible pour l'appareil (110),
ledit premier état étant un état fonctionnel dans lequel le moyen de communication sans fil (112) est découvrable et connectable par d'autres dispositifs (130), et
ledit deuxième état étant un état fonctionnel dans lequel le moyen de communication sans fil (112) est découvrable mais pas connectable par d'autres dispositifs (130), et
déterminer si une puissance de fonctionnement suffisante est disponible pour l'appareil (110),
amener le moyen de communication sans fil (112) à fonctionner dans ledit premier état en réponse au fait que ladite détermination est affirmative et, dans le cas contraire, amener le moyen de communication sans fil (112) à fonctionner dans ledit deuxième état,
**caractérisé en ce que** le moyen de communication sans fil (112) est configuré pour émettre, lorsqu'il fonctionne dans l'un des premier et deuxième états, un ou plusieurs messages d'annonce comprenant une indication de l'état fonctionnel actuel du moyen de communication sans fil (112), lesdits un ou plusieurs messages d'annonce comprenant des paquets d'annonce conformes au protocole Bluetooth Low Energy, dit BLE,
des paquets d'annonce émis au cours d'un fonctionnement dans le premier état comprenant des paquets d'annonce BLE ADV_IND, et
des paquets d'annonce émis au cours d'un fonctionnement dans le deuxième état comprenant des paquets d'annonce BLE ADV_NONCONN_IND.

2. Appareil selon la revendication 1, dans lequel ladite détermination comprend le fait de déterminer si une réserve de puissance disponible dans une source de puissance accessible par l'appareil dépasse un seuil prédéfini.

3. Appareil selon la revendication 1 ou 2, dans lequel ladite détermination comprend le fait de déterminer si l'appareil reçoit une puissance de fonctionnement depuis une alimentation en puissance externe.

4. Appareil selon l'une quelconque des revendications 1 à 3, dans lequel le moyen de commande est conçu pour accomplir au moins une des opérations suivantes :
ajuster un intervalle d'émission desdits un ou plusieurs messages d'annonce en fonction de la suffisance d'une puissance de fonctionnement disponible pour l'appareil ; et
ajuster un niveau de puissance d'émission desdits un ou plusieurs messages d'annonce en fonction de la suffisance d'une puissance de fonctionnement disponible pour l'appareil.

5. Appareil selon l'une quelconque des revendications 1 à 4, dans lequel des messages d'annonce émis au cours d'un fonctionnement au moins dans l'un des premier et deuxième états comprennent un sous-ensemble limité des informations disponibles dans l'appareil.

6. Appareil selon l'une quelconque des revendications 1 à 5, dans lequel le moyen de communication sans fil est configuré pour établir, en réponse à la réception d'une demande de connexion lors d'un fonctionnement dans ledit premier état, une connexion sans fil avec une source de ladite demande de connexion, et
dans lequel le moyen de commande est configuré pour amener le moyen de communication sans fil à mettre en oeuvre au moins une des opérations suivantes :
émettre des informations disponibles dans l'appareil à destination de ladite source par le biais de la connexion sans fil établie, et
recevoir des informations relatives à une configuration de l'appareil depuis ladite source par le biais de la connexion sans fil établie.

7. Appareil selon la revendication 5 ou 6,
lequel appareil comprend en outre un moyen capteur comprenant un ou plusieurs capteurs servant à mesurer des valeurs d'un ou de plusieurs paramètres environnementaux respectifs ; et
dans lequel lesdites informations disponibles dans l'appareil comprennent une ou plusieurs valeurs mesurées d'au moins un desdits un ou plusieurs paramètres environnementaux.

8. Procédé (400), dans un appareil (110) pour communiquer sans fil, le procédé (400) comprenant les étapes suivantes
fonctionnement sélectif d'un moyen de communication sans fil (112) dans ledit appareil (110) dans un état parmi un premier état et un deuxième état en fonction de la suffisance d'une puissance de fonctionnement disponible pour l'appareil (110), le moyen de communication sans fil (112) permettant de communiquer sans fil avec d'autres dispositifs (130) et
ledit premier état étant un état fonctionnel dans lequel le moyen de communication sans fil (112) est découvrable et connectable par d'autres dispositifs (130), et
ledit deuxième état étant un état fonctionnel dans lequel le moyen de communication sans fil (112) est découvrable mais pas connectable par d'autres dispositifs (130),
détermination (420) si une puissance de fonctionnement suffisante est disponible pour l'appareil (110),
fonctionnement (430, 440) du moyen de communication sans fil (112) dans ledit premier état en réponse au fait que ladite détermination est affirmative et, dans le cas contraire, fonctionnement du moyen de communication sans fil (112) dans ledit deuxième état,
le procédé (400) étant **caractérisé en ce qu'**il comprend l'étape d'émission, par le moyen de communication sans fil (112), lorsqu'il fonctionne dans l'un des premier et deuxième états, d'un ou de plusieurs messages d'annonce comprenant une indication de l'état fonctionnel actuel du moyen de communication sans fil (112), lesdits un ou plusieurs messages d'annonce comprenant des paquets d'annonce conformes au protocole Bluetooth Low Energy, dit BLE,
des paquets d'annonce émis au cours d'un fonctionnement dans le premier état comprenant des paquets d'annonce BLE ADV_IND, et
des paquets d'annonce émis au cours d'un fonctionnement dans le deuxième état comprenant des paquets d'annonce BLE ADV_NONCONN_IND.

9. Procédé selon la revendication 8, dans lequel ladite étape de détermination comprend l'étape de détermination si une réserve de puissance disponible dans une source de puissance accessible par l'appareil dépasse un seuil prédéfini.

10. Procédé selon la revendication 8 ou 9, dans lequel ladite étape de détermination comprend l'étape de détermination si l'appareil reçoit une puissance de fonctionnement depuis une alimentation en puissance externe.

11. Procédé selon l'une quelconque des revendications 8 à 10, comprenant en outre l'étape d'ajustement d'un intervalle d'émission desdits un ou plusieurs messages d'annonce en fonction de la suffisance d'une puissance de fonctionnement disponible pour l'appareil.

12. Programme d'ordinateur comprenant un code de programme lisible par ordinateur configuré pour provoquer la mise en oeuvre du procédé selon l'une quelconque des revendications 8 à 11 lorsque ledit code de programme est exécuté sur un appareil informatique.
